# EUROPÄISCHE PATENTSCHRIFT

(11) **EP 1 669 224 B1**
(45) Veröffentlichungstag und Bekanntmachung des Hinweises auf die Patenterteilung: **01.09.2010**
(21) Anmeldenummer: 05025399.6
(22) Anmeldetag: 22.11.2005
(51) Int. Cl.: B60H 1/00, B60H 1/32

(54) **Klimaanlage mit einem Verdampfer mit Kondenswasserablauf**
Air conditioner including an evaporator with a condensed water drain
Climatisateur comprenant un évaporateur avec une bouche d'écoulement de l'eau de condensation

(30) Priorität: 13.12.2004 DE 102004060130
(43) Veröffentlichungstag der Anmeldung: 14.06.2006
(73) Patentinhaber: Behr GmbH & Co. KG, 70469 Stuttgart (DE)
(72) Erfinder: Berger, Michael, 70563 Stuttgart (DE); Kiel, Ronny, Dipl.-Ing. (FH), 70771 Leinfeld-Oberaichen (DE); Stechert, Anja, 70174 Stuttgart (DE)
(74) Vertreter: Mantel, Berthold Friedrich

(56) Entgegenhaltungen:
- EP-A- 1 101 640
- DE-A1- 3 623 185
- DE-A1- 4 410 120
- DE-A1- 10 147 759
- DE-A1- 19 534 738
- DE-A1- 19 835 448

## Beschreibung

Die Erfindung betrifft eine Klimaanlage mit einem Verdampfer mit Kondenswasserablauf gemäß dem Oberbegriff des Anspruches 1.

Aus der DE 43 36 822 A1 ist ein Kondenswasserabscheider für Verdampfer in Kraftfahrzeug-Klimaanlagen bekannt, bei dem ein Gitter auf der Rückseite des Verdampfers angeclipst ist und sich quer zur Luftströmungsrichtung erstreckt. Dabei besteht das Gitter aus einer Kunsfistoffplatte mit einer Vielzahl kleiner Öffnungen. Ferner weist die Kunststoffplatte eine im Wesentlichen wellenförmige Gestalt auf, wobei die Wellung im Wesentlichen horizontal verläuft. Die Ableitung der sich ansammelnden Tropfen erfolgt durch die auf die Flüssigkeit wirkende Schwerkraft nach unten, wo das gesammelte Kondenswasser aus dem Klimaanlagen-Gehäuse nach außen gelangen kann.

Die DE 44 10 120 A1 offenbart eine Klimaanlage für ein Kraftfahrzeug mit einem Gehäuse, in dem ein Kältemittel-Verdampfer und ein Heizkörper angeordnet sind, wobei in dem Gehäuse eine Ablauföffnung zum Abführen von im Verdampfer kondensierendem Wasser vorgesehen ist. Die sich an der Ausströmseite des Verdampfers sammelnden Kondenswassertropfen tropfen entweder auf Grund der Schwerkraft nach unten, oder werden - bei hoher Luftströmungsgeschwindigkeit - in Richtung des nachfolgend angeordneten Heizkörpers mitgerissen. Bei dieser Klimaanlage ist am Boden des Gehäuses ein Kanal vorgesehen, der in einem Bereich unterhalb des Verdampfers und/oder des Heizkörpers verläuft, und der mindestens eine erste Öffnung nahe des Verdampfers und mindestens eine zweite Öffnung am tiefsten Punkt unterhalb des Heizkörpers besitzt und zu der Ablauföffnung führt. Der Kanal ist hierbei saugschlauchartig ausgebildet, so dass die Ableitung des Kondenswassers durch eine Sogwirkung unterstützt wird.

Aus der DE 195 49 695 B4 ist eine Klimaanlage für ein Fahrzeug mit einem Passagierraum bekannt, mit einer Gebläseeinheit zum Blasen von Luft, und einer Klimaanlageneinheit zum Einstellen eines in den Passagierraum zu blasenden Luftzustands, wobei die Klimaanlageneinheit im Wesentlichen im Mittelabschnitt der Instrumentenkonsole an einer bezüglich des Luftstroms stromabwärtigen Seite der Gebläseeinheit in einem Gehäuse angeordnet ist, und die Klimaanlageneinheit einen Kühl-Wärmetauscher und ein Ablaufrohr, durch welches kondensiertes Wasser, das durch den Kühl-Wärmetauscher erzeugt wird, an eine Außenseite des Gehäuses abgelassen wird, aufweist. Der Kühl-Wärmetauscher ist gegenüber einer horizontalen Fläche geringfügig geneigt, wobei unter dem Kühl-Wärmetauscher in dem Gehäuse ein Raum gebildet ist und Luft aus der Gebläseeinheit etwa horizontal durch den Raum eingeleitet wird und durch den Kühl-Wärmetauscher von unten nach oben strömt. Das Ablaufrohr ist an einer bezüglich der Luft stromaufwärtigen Seite des Kühl-Wärmetauschers an einer untersten Position des Gehäuses unterhalb einer unteren Seitenoberfläche des Kühl-Wärmetauschers angeordnet, insbesondere an einer Position unter einem geneigten unteren Ende des Kühl-Wärmetauschers. Die Neigung des Kühl-Wärmetauschers zur horizontalen Fläche beträgt insbesondere 10 bis 30°. Das vom Kühl-Wärmetauscher nach unten abtropfende Kondenswasser sammelt sich, auf dem Boden, welcher eine konkave und konvexe Oberfläche und vertieft ausgebildete und leicht schräg bezüglich der Horizontalen und in Richtung des Ablaufrohres verlaufende Ablaufkanäle aufweist, und wird - bei laufendem Gebläse - von dem Luftstrom, welcher durch das Gebläse erzeugt wird, direkt zum Ablaufrohr ausgetragen und nach außen abgeführt. Bei stehendem Gebläse, wie auch bei laufendem Gebläse, wird das Kondenswasser außerdem über die Ablaufkanäle, die nach unten geneigt ausgebildet sind, zum Ablaufrohr geleitet und nach außen abgeführt. Gemäß einer speziellen Ausführungsform ist eine Mehrzahl vertikal angeordneter Führungsplatten unterhalb des Kühl-Wärmetauschers vorgesehen, die ein Abtropfen des Kondenswassers verhindem und das Kondenswasser kontinuierlich zum Ablaufrohr leiten.

Die DE 3 623 185, die als nächstligender Stand der Technik angesehen wird, offenbart eine gattungsgemäße Klimaanlage mit allen Merkmalen des Oberbegriffs des Anspruchs 1.

Derartige Klimaanlagen lassen jedoch noch Wünsche offen.

Der Erfindung liegt die Aufgabe zugrunde, eine Klimaanlage mit einem Verdampfer der eingangs genannten Art zu verbessern.

Diese Aufgabe wird erfindungsgemäß durch eine Klimaanlage mit einem Verdampfer mit den Merkmalen des Anspruches 1 gelöst. Vorteilhafte Ausgestaltungen sind Gegenstand der Unteransprüche.

Erfindungsgemäß ist eine Klimaanlage mit einem in einem Gehäuse angeordneten Verdampfer für eine Kraftfahrzeug-Klimaanlage vorgesehen, wobei ein Kondenswasserablauf zum Abführen des sich sammelnden Kondenswassers aus dem Gehäuse vorgesehen ist, in dessen Bereich, oberhalb hiervon, eine die Luftströmung beruhigende Abdeckung vorgesehen ist. Durch das Absenken der Luftströmungsgeschwindigkeit, bevorzugt auf Null, wirken auf das sich sammelnde Kondenswasser außer der Schwerkraft keine weiteren Kräfte, und das Kondenswasser wird nach unten zum Kondenswasserablauf geführt. Erfindungsgemäß ist die Abdeckung luftanströmseitig geschlossen und luftabströmseitig geöffnet ausgebildet.

Der Verdampfer ist bevorzugt entgegen der Luftströmungsrichtung geneigt angeordnet, insbesondere bevorzugt in einem Winkel zur Vertikalen von mindestens 45°. Dies unterstützt ein Ablaufen des sich im Verdampfer ansammelnden Kondenswassers entgegen der Luftströmungsrichtung, so dass auch bei einer Einbausituation, die einen vertikalen Einbau des Verdampfers nicht zulässt, das Kondenswasser daran gehindert werden kann in den Fahrzeuginnenraum zu gelangen.

Bevorzugt ist ein Kondenswasserabscheider luftanströmseitig des Verdampfers angeordnet. Dieser kann beispielsweise durch ein Gitter gebildet sein. Andere Ausführungsformen sind möglich.

Die Abdeckung ist vorzugsweise am Gehäuse angespritzt, insbesondere bevorzugt an dem Gehäuseteil, welches den Verdampfersitz oder einen Teil hiervon bildet. Dadurch verringert sich die Teileanzahl, und die Montage wird durch die geänderte Konstruktion nicht erschwert.

Am Gehäuse sind vorzugsweise im Bereich des Verdampfersitzes Rippen vorgesehen, welche den Verdampfer vom Gehäuse etwas beabstanden, so dass das Gehäuse nicht direkt in flächigem Kontakt mit dem kalten Verdampfer steht.

Bevorzugt sind am Gehäuse im Bereich des Verdampfersitzes Öffnungen zum Durchleiten des Kondenswassers vorgesehen, in welchen Labyrinth-Dichtungen zum Verhindern einer unerwünschten Luftdurchströmung angeordnet sind.

Die Öffnungen sind bevorzugt V-förmig ausgebildet, wobei sie sich zur Abdeckung hin verjüngen.

Die Labyrinth-Dichtungen sind vorzugsweise durch fischgrätenartig angeordnete Rippen gebildet, wobei die Rippen bevorzugt angespritzt sind. Die Rippen sind hierbei bevorzugt etwa parallel zu den Wänden der V-förmigen Öffnung und jeweils versetzt zueinander angeordnet, wobei der Öffnungswinkel der V-förmigen Öffnungen bevorzugt etwa 90° beträgt. Vorteilhafterweise sind die Rippen an den Wänden ausgebildet beziehungsweise angebunden, wobei durch die gewählte Anordnung ein hoher Druckverlust an dieser Öffnung erreicht werden kann.

An der Abdeckung sind vorzugsweise Versteifungsrippen ausgebildet, welche eine geringe Wandstärke ermöglichen, so dass ein geringes Baugewicht bei guter Stabilität erreicht werden kann.

Am Gehäuse sind zur Aufnahme des unteren Rands der Abdeckung bevorzugt parallel zueinander verlaufende Stege angeordnet, welche eine exakte Positionierung der Abdeckung und zudem eine ausreichende Abdichtung des Raumes unterhalb der Abdeckung gegenüber dem Luftkanal ermöglichen.

Um Kondenswasser aus dem Luftkanal in den Raum unterhalb der Abdeckung zu lassen, ist bevorzugt mindestens ein Spalt zwischen Abdeckung und Gehäuse vorgesehen, welcher entsprechend auch im Bereich der beiden parallel zueinander verlaufenden Stege vorgesehen ist. Hierbei sind bevorzugt insgesamt zwei Spalte vorgesehen, je einer auf einer Seite, die etwa in Luftströmungsrichtung verläuft.

Bevorzugt wird die Kondenswasserableitung dadurch unterstützt, dass der Kondenswasserabscheider, welcher bevorzugt durch ein Gitter gebildet ist, wie auch der Verdampfer eine hydrophile Oberfläche aufweist. Das verbesserte Ablaufen von Kondenswasser stellt auch sicher, dass keine unerwünschten Gerüche entstehen. Da bevorzugt sowohl das Gitter als auch der Verdampfer die hydrophile Oberfläche aufweisen, kann diese bevorzugt in einem Arbeitsgang aufgebracht werden, vorzugsweise mittels Eintauchen in ein Bad, wodurch sich der Herstellungsaufwand verringert und Produktionskosten gesenkt werden können.

Alternativ kann der Kondenswasserabscheider auch eine hydrophobe Oberfläche aufweisen, welche ein Abperlen und Abtropfen des Kondenswassers unterstützt.

Den gezielten Ablauf des Kondenswassers unterstützend, drückt die durch das Gebläse getriebene Luftströmung das entstehende Kondenswasser entlang der luftanströmseitigen Verdampferfläche beziehungsweise des Kondenswasserabscheiders in Richtung des Kondenswasserablaufs und verhindert so ein vorzeitiges Abtropfen, insbesondere vor der Abdeckung des Kondenswasserablaufs.

Ebenfalls können sowohl hydrophile als auch hydrophobe Bereiche im Verdampfer und am Kondenswasserabscheider vorgesehen sein, welche ein optimales Abführen des Kondenswassers nach unten ermöglichen und ein Mitreißen des sich sammelnden Kondenswassers im Luftstrom möglichst verhindern.

Im Falle einer entsprechenden hydrophilen oder hydrophoben Beschichtung des Verdampfers kann der Kondenswasserabscheider in einer weiteren erfindungsgemäßen Variante auch entfallen.

Im Folgenden ist die Erfindung anhand von Ausführungsbeispielen näher erläutert. Es zeigen:
- Fig. 1: einen Schnitt durch eine Kraflfahrzeug-Klimaanlage entlang einer vertikalen Ebene, ohne Heizkörper,

- Fig. 2: eine Draufsicht auf die Kraftfahrzeug-Klimaanlage von Fig. 1,

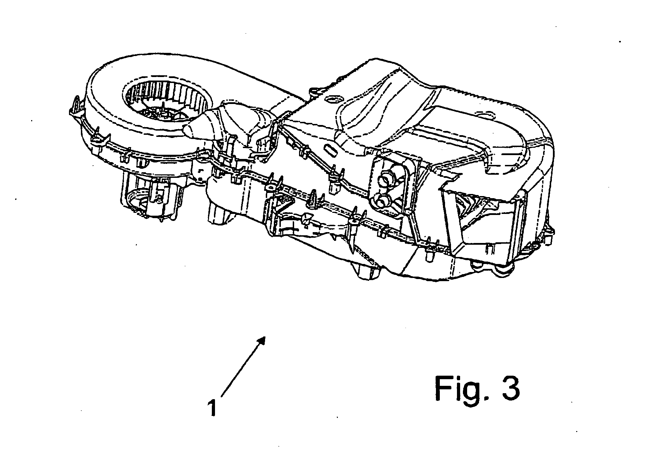

- Fig. 3: eine perspektivische Ansicht der Kraftfahrzeug-Klimaanlage von Fig. 1,
- Fig. 4: eine Darstellung der Abdeckung und eines Gehäuseteils, an dem die Abdeckung angespritzt ist, der Kraftfahrzeug-Klimaanlage von Fig. 1,
- Fig. 5: einen Schnitt entlang Linie A-A in Fig. 4,
- Fig. 6: eine Darstellung eines Teils des Gehäuses einer Kraftfahrzeug-Klimaanlage gemäß dem ersten Ausführungsbeispiel im Bereich des Verdampfersitzes mit Darstellung der Abdeckung,
- Fig. 7: einen Schnitt entlang Linie A-A in Fig. 6,

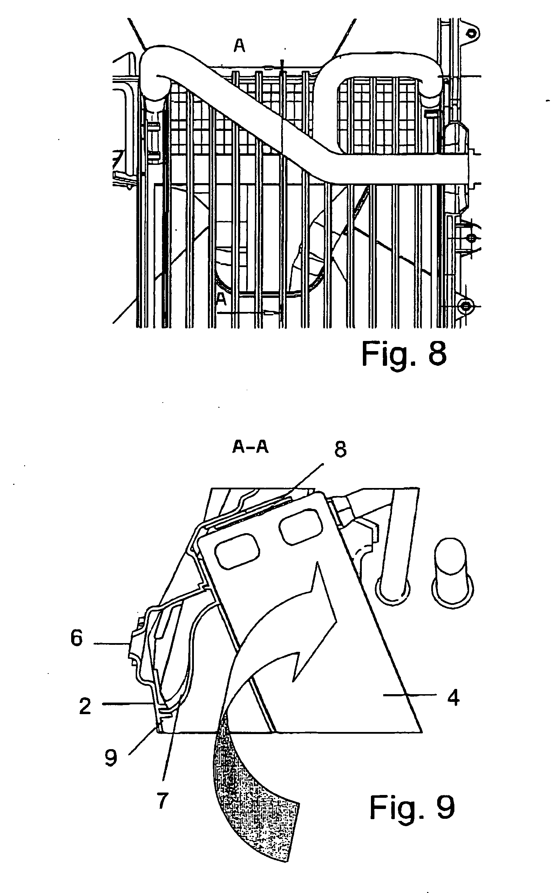

- Fig. 8: eine Fig. 6 entsprechende Ansicht eines Teils des Gehäuses einer Kraftfahrzeug-Klimaanlage mit Verdampfer gemäß dem ersten Ausführungsbeispiel im Bereich des Verdampfersitzes mit Kondenswasserablauf,
- Fig. 9: einen Schnitt entlang Linie A-A in Fig. 8,
- Fig. 10: einen Teil eines Gehäuses mit Kondensatablauf und zusätzlichem Labyrinth gemäß dem zweiten Ausführungsbeispiel, und

- Fig. 11: einen Schnitt durch einen Teil des Gehäuses einer Kraftfahrzeug-Klimaanlage gemäß dem dritten Ausführungsbeispiel im Bereich des Verdampfersitzes mit Kondenswasserablauf und zusätzlichem Labyrinth.

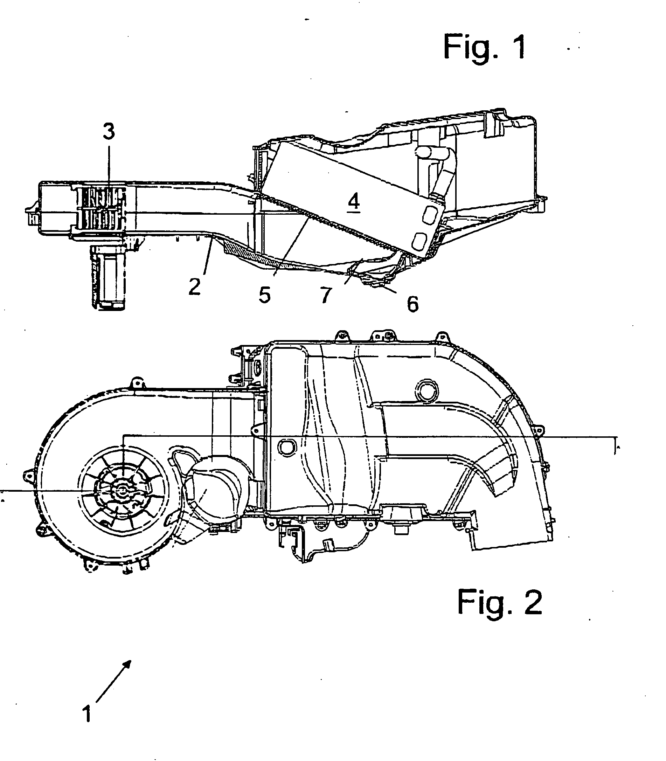

Eine Kraftfahrzeug-Klimaanlage 1 weist ein in einem Gehäuse 2 angeordnetes Gebläse 3, einen Verdampfer 4 und einen Heizkörper (nicht dargestellt) auf. Auf Grund des für die Klimaanlage 1 im Kraftfahrzeug zur Verfügung stehenden Bauraums ist der Verdampfer 4, wie aus Fig. 1 ersichtlich, sehr schräg, gemäß dem dargestellten ersten Ausführungsbeispiel nahezu liegend, eingebaut. Der Winkel zur Horizontalen beträgt vorliegend ca. 20°, jedoch kann die gesamte Anordnung beispielsweise um weitere 10° zur Horizontalen geneigt ausgebildet sein, so dass sich dann insgesamt eine Neigung von 30° ergibt.

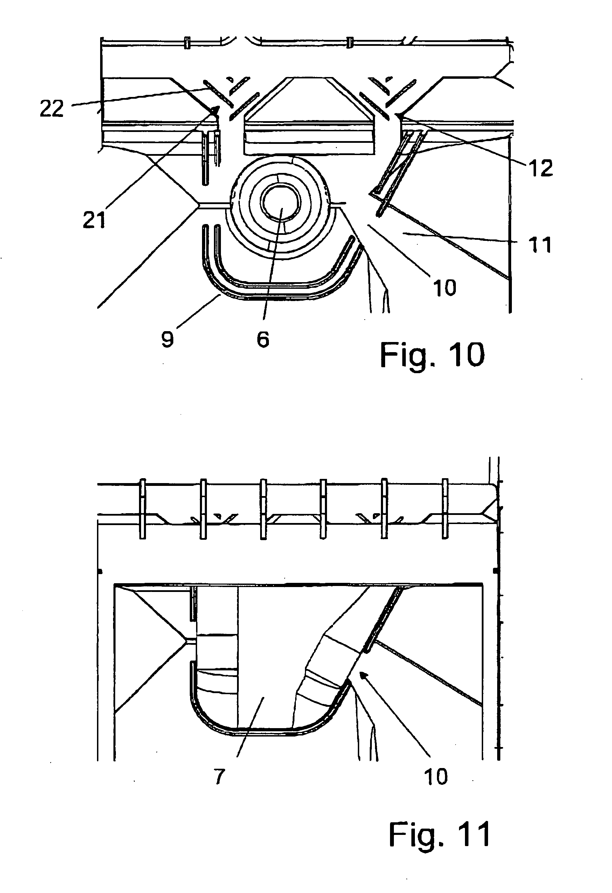

Auf der Luftanströmseite ist am Verdampfer 4 ein Gitter 5 zur Kondenswasserabscheidung vorgesehen, weshalb das Kondenswasser entgegen der Luftströmung zum Kondenswasserablauf 6 im untersten Bereich des Gehäuses 2 gelangen muss. Um einen beruhigten Bereich bezüglich der vor dem Verdampfer 4 herrschenden Luftströmung zu erhalten, der ein Mitreißen des sich am Boden des Gehäuses 2 sammelnden Kondenswassers verhindert, ist im unteren luftanströmseitig angeordneten Bereich des Verdampfers 4 eine haubenartige, vorliegend an einem Gehäuseteil angespritzte Abdeckung 7 für den Kondenswasserablauf 6 vorgesehen, unter welcher der Kondenswasserablauf 6 vorliegend zentral angeordnet ist (vgl. hierzu Fig. 10, welche ein zweites Ausführungsbeispiel zeigt, jedoch in diesem Bereich gleich wie das erste Ausführungsbeispiel ausgebildet ist). Durch die Abdeckung 7 ist es möglich, dass sich zwei Strömungen in entgegen gesetzter Richtung bewegen, ohne sich zu behindern, so dass das Kondenswasser entgegen der Luftströmung zum Kondenswasserablauf 6 gelangt. Hierbei ist der Verdampfer 4 ausreichend hoch über dem Bereich des Gehäusebodens in welchem sich das Kondenswasser sammelt, angeordnet, so dass auch bei hohen Luftströmungsgeschwindigkeiten kein ungewolltes Mitreißen und Mitführen des sich ansammelnden Kondenswassers durch den Verdampfer 4 hindurch möglich ist.

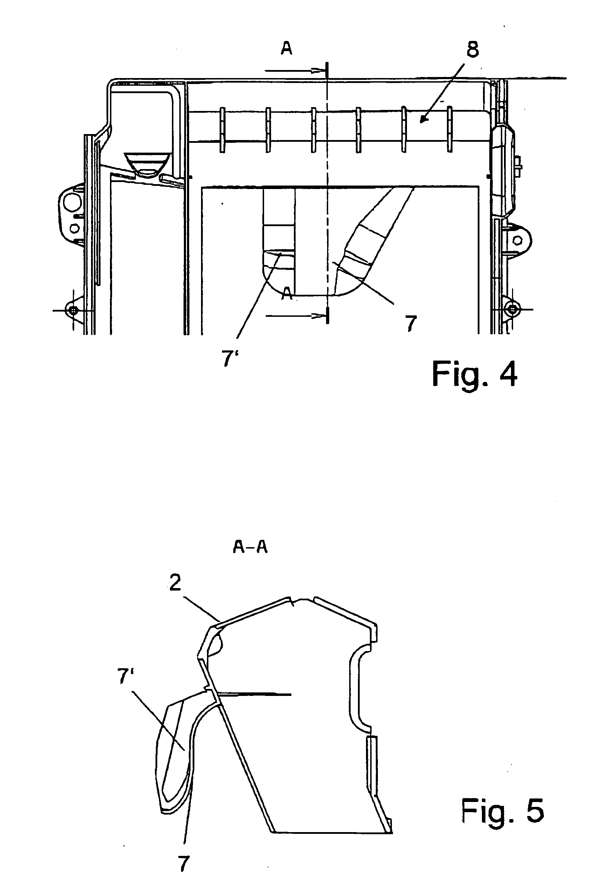

Fig. 4 zeigt einen Schnitt des Gehäuses 2 mit Abdeckung 7 in einer Ebene, die etwa parallel zum Verdampfersitz 8 angeordnet ist. Hierbei ist eine Mehrzahl von Rippen 9 im Bereich des Verdampfersitzes 8 vorgesehen. Räumlich gesehen unterhalb des Verdampfersitzes 8 ist die Abdeckung 7 vorgesehen, welche in Folge der Schnittdarstellung räumlich gesehen oben abgeschnitten ist. Hierbei ist die Gestalt der Abdeckung 7 asymmetrisch, wie aus Fig. 4 ersichtlich ist, wobei sie in der in Fig. 4 dargestellten Ebene einen etwa U-förmigen Querschnitt aufweist, bei dem ein Schenkel nach außen geneigt ist. Die Abdeckung 7 weist mehrere Versteifungsrippen 7' auf, welche für eine ausreichende Stabilität der Abdeckung 7 sorgen. Ein Schnitt durch die Abdeckung 7 und den Verdampfersitz 8 entlang der Linie A-A von Fig. 4 ist in Fig. 5 dargestellt. Vorliegend ist die Abdeckung 7 am Teil des Gehäuses 2, welches den Verdampfersitz 8 bildet, angespritzt.

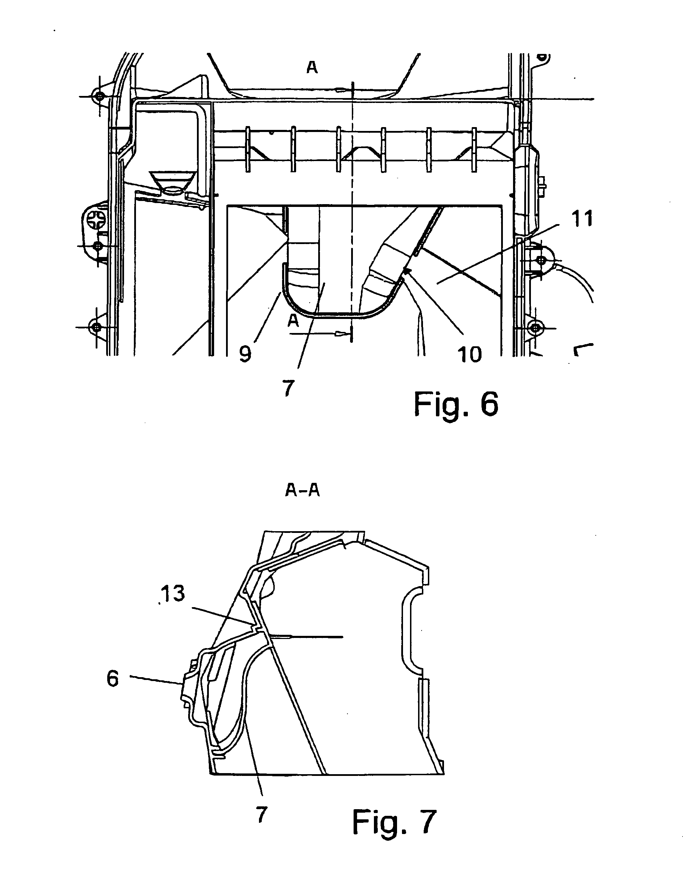

In Fig. 6 ist der Gehäuseboden angebracht, wobei am Gehäuseboden parallel verlaufende zur abdichtenden Aufnahme des unteren Randes der Abdeckung 7 dienende parallel zueinander verlaufende Stege 9 ausgebildet sind (vgl. hierzu auch die Darstellung dieses Bereichs eines an späterer Stelle beschriebenen Ausführungsbeispiels in Fig. 10). Wie aus der Zeichnung ersichtlich ist, sind zwei Spalte 10, je einer auf einer etwa in Luftströmungsrichtung verlaufenden Seite der Abdeckung 7, zwischen Abdeckung 7 und Gehäuse 2 vorgesehen. Durch diese Spalte 10 kann das sich außerhalb der Abdeckung sammelnde Kondenswasser, welches mit Hilfe von auf die Spalte 10 zu führenden Vertiefungen 11 im Gehäuseboden unter die Abdeckung 7 und weiter zum Kondenswasserablauf 6 gelangen.

Auf der Seite des Verdampfersitzes 8 sind im Gehäuse 2 zwei V-förmige Öffnungen 12 ausgebildet, durch welche Kondenswasser ebenfalls unter die Abdeckung 7 gelangen kann. Zwischen dem Gehäuse 2 im Bereich des Verdampfersitzes 8 und der Abdeckung 7 im Bereich des Verdampfersitzes 8 ist in den Bereichen rechts und links der Öffnungen 12 ein Dichtspalt 13 vorgesehen, welcher ein Einströmen von Luft verhindert, so dass im Wesentlichen auf ein zusätzliches Abdichten des Verdampfers 4 verzichtet werden kann.

Gemäß einem zweiten Ausführungsbeispiel ist unterhalb des Verdampfersitzes 8 in den zwei V-förmigen Öffnungen 12 zur Durchleitung des Kondenswassers jeweils eine Labyrinth-Dichtung 21 vorgesehen ist, welches den Verdampfersitz 8 bzw. die in diesem Bereich hieran angespritzte Abdeckung 7 gegenüber dem Gehäuseboden abdichtet (in Fig. 11 zusammengebaut dargestellt). Die Labyrinth-Dichtung 21 wird durch mehrere fischgrätenartig angeordnete Rippen 22 gebildet, wobei die Rippen 22 jeweils parallel zu den seitlichen Wänden der V-förmigen Öffnung 12 versetzt zueinander angeordnet sind (vgl. Fig. 10).

Zusätzlich zu den dargestellten Ausführungsbeispielen, sei hier noch erwähnt, dass stromab des Verdampfers ein weiterer Wärmetauscher, wie beispielsweise ein Heizkörper, der vom Kühlmittel eines Fahrzeugmotors gespeist wird und/oder eine elektrische Heizeinrichtung wie beispielsweise eine PTC-Heizung angeordnet sein können.

## Patentansprüche

1. Klimaanlage, insbesondere Kraftfahrzeug-Klimaanlage, mit einem in einem Gehäuse (2) angeordneten Verdampfer (4), der einen Kondenswasserablauf (6) zum Abführen des sich sammelnden Kondenswassers aus dem Gehäuse (2) aufweist, wobei im Bereich des Kondenswasserablaufs (6) eine die Luftströmung beruhigende Abdeckung (7) oberhalb des Kondenswasserablaufs (6) vorgesehen ist, **dadurch gekennzeichnet, dass** die Abdeckung (7) luftanströmseitig geschlossen und luftabströmseitig geöffnet ausgebildet ist.

2. Klimaanlage nach Anspruch 1, **dadurch gekennzeichnet, dass** der Verdampfer (4) entgegen der Luftströmungsrichtung geneigt angeordnet ist

3. Klimaanlage nach Anspruch 2, **dadurch gekennzeichnet, dass** der Neigungswinkel des Verdampfers (4) zur Vertikalen mindestens 45° beträgt.

4. Klimaanlage nach einem der vorstehenden Ansprüche, **dadurch gekennzeichnet, dass** ein Kondenswasserabscheider (5) luftanströmseitig des Verdampfers (4) angeordnet ist.

5. Klimaanlage nach einem der vorstehenden Ansprüche, **dadurch gekennzeichnet, dass** die Abdeckung (7) am Gehäuse (2) angespritzt ist.

6. Klimaanlage nach einem der vorstehenden Ansprüche, **dadurch gekennzeichnet, dass** die Abdeckung (7) im Bereich des Verdampfersitzes (8) am Gehäuse (2) angespritzt oder angebracht ist.

7. Klimaanlage nach einem der vorstehenden Ansprüche, **dadurch gekennzeichnet, dass** am Gehäuse (2) im Bereich des Verdampfersitzes (8) Rippen vorgesehen sind.

8. Klimaanlage nach einem der vorstehenden Ansprüche, **dadurch gekennzeichnet, dass** am Gehäuse (2) im Bereich des Verdampfersitzes Öffnungen zum Durchleiten des Kondenswassers vorgesehen sind, in welchen Labyrinth-Dichtungen (21) angeordnet sind.

9. Klimaanlage nach Anspruch 8, **dadurch gekennzeichnet, dass** die Öffnungen (12) V-förmig ausgebildet sind.

10. Klimaanlage nach Anspruch 8 oder 9, **dadurch gekennzeichnet, dass** die Labyrinth-Dichtungen (21) durch fischgrätenartig angeordnete Rippen (22) gebildet sind.

11. Klimaanlage nach einem der vorstehenden Ansprüche, **dadurch gekennzeichnet, dass** an der Abdeckung (7) Versteifungsrippen (7') ausgebildet sind.

12. Klimaanlage nach einem der vorstehenden Ansprüche, **dadurch gekennzeichnet, dass** am Gehäuse (2) zur Aufnahme des unteren Randes der Abdeckung (7) parallel zueinander verlaufende Stege (9) angeordnet sind.

13. Klimaanlage nach Anspruch 12, **dadurch gekennzeichnet, dass** mindestens ein Spalt (10) zwischen Abdeckung (7) und Gehäuse (2) vorgesehen ist, durch welchen Kondenswasser vom im Gehäuse (2) ausgebildeten Luftkanal unter die Abdeckung (7) gelangen kann.

14. Klimaanlage nach Anspruch 13, **dadurch gekennzeichnet, dass** mindestens ein Spalt (10) je Seite, die etwa in Luftströmungsrichtung verläuft, vorgesehen ist.

## Claims

1. An air conditioner, particularly a motor vehicle air conditioner, comprising an evaporator (4) which is disposed in a housing (2) and has a condensation water drain (6) for removing the accumulating condensation water from the housing (2), a cover (7) steadying the air flow being provided above the condensation water drain (6) in the region of the condensation water drain (6), **characterized in that** the cover (7) is closed on the air inflow side and open on the air outflow side.

2. The air conditioner according to claim 1, **characterized in that** the evaporator (4) is disposed at an incline counter to the air flow direction.

3. The air conditioner according to claim 2, **characterized in that** the angle of inclination of the evaporator (4) to the vertical line is at least 45°.

4. An air conditioner according to any one of the preceding claims, **characterized in that** a condensation water trap (5) is disposed on the air inflow side of the evaporator (4).

5. An air conditioner according to any one of the preceding claims, **characterized in that** the cover (7) is molded onto the housing (2).

6. An air conditioner according to any one of the preceding claims, **characterized in that** the cover (7) is molded onto or attached to the housing (2) in the region of the evaporator seat (8).

7. An air conditioner according to any one of the preceding claims, **characterized in that** ribs are provided on the housing (2) in the region of the evaporator seat (8).

8. An air conditioner according to any one of the preceding claims, **characterized in that** openings are provided on the housing (2) in the region of the evaporator seat for conducting through the condensation water, labyrinth glands (21) being disposed in the openings.

9. The air conditioner according to claim 8, **characterized in that** the openings (12) have a V-shaped configuration

10. The air conditioner according to claim 8 or 9, **characterized in that** the labyrinth glands (21) are formed by ribs (22) disposed in a fishbone-like manner.

11. An air conditioner according to any one of the preceding claims, **characterized in that** reinforcement ribs (7') are configured on the cover (7).

12. An air conditioner according to any one of the preceding claims, **characterized in that** webs (9) running parallel to each other are disposed on the housing (2) for receiving the lower edge of the cover (9).

13. The air conditioner according to claim 12, **characterized in that** at least one gap (10), through which condensation water can reach the cover (7) from the air duct configured in the housing (2), is provided between the cover (7) and the housing (2).

14. The air conditioner according to claim 13, **characterized in that** at least one gap (10) is provided on each side running approximately in the air flow direction.

## Revendications

1. Système de climatisation, en particulier système de climatisation pour un véhicule automobile, comprenant un évaporateur (4) disposé dans un carter (2), évaporateur qui présente un orifice d'écoulement d'eau de condensation (6) servant à évacuer du carter (2), l'eau de condensation qui s'accumule, où, dans la zone de l'orifice d'écoulement d'eau de condensation (6), il est prévu, au-dessus de l'orifice d'écoulement d'eau de condensation (6), un couvercle (7) stabilisant l'écoulement de l'air,
**caractérisé en ce que** le couvercle (7) est configuré en étant fermé côté arrivée d'air et ouvert côté sortie d'air.

2. Système de climatisation selon la revendication 1, **caractérisé en ce que** l'évaporateur (4) est disposé en étant incliné en sens opposé à la direction d'écoulement de l'air.

3. Système de climatisation selon la revendication 2, **caractérisé en ce que** l'angle d'inclinaison de l'évaporateur (4) est d'au moins 45° par rapport à la verticale.

4. Système de climatisation selon l'une quelconque des revendications précédentes, **caractérisé en ce qu'**un séparateur d'eau de condensation (5) est disposé sur le côté de l'arrivée d'air de l'évaporateur (4).

5. Système de climatisation selon l'une quelconque des revendications précédentes, **caractérisé en ce que** le couvercle (7) est moulé par injection sur le carter (2).

6. Système de climatisation selon l'une quelconque des revendications précédentes, **caractérisé en ce que** le couvercle (7) est moulé par injection ou appliqué sur le carter (2), dans la zone du siège (8) de l'évaporateur.

7. Système de climatisation selon l'une quelconque des revendications précédentes, **caractérisé en ce que** des nervures sont prévues sur le carter (2), dans la zone du siège (8) de l'évaporateur.

8. Système de climatisation selon l'une quelconque des revendications précédentes, **caractérisé en ce que** des ouvertures servant à diriger l'eau de condensation sont prévues sur le carter (2), dans la zone du siège de l'évaporateur, ouvertures dans lesquelles sont disposés des joints d'étanchéité à labyrinthe (21).

9. Système de climatisation selon la revendication 8, **caractérisé en ce que** les ouvertures (12) sont configurées en forme de V.

10. Système de climatisation selon la revendication 8 ou 9, **caractérisé en ce que** les joints d'étanchéité à labyrinthe (21) sont formés par des nervures (22) disposées en chevrons.

11. Système de climatisation selon l'une quelconque des revendications précédentes, **caractérisé en ce que** des nervures de renfort (7') sont configurées sur le couvercle (7).

12. Système de climatisation selon l'une quelconque des revendications précédentes, **caractérisé en ce que** des nervures (9) servant au logement du bord inférieur du couvercle (7) et s'étendant parallèlement entre elles sont disposées sur le carter (2).

13. Système de climatisation selon la revendication 12, **caractérisé en ce qu'**il est prévu au moins un intervalle (10) entre le couvercle (7) et le carter (2), intervalle à travers lequel de l'eau de condensation provenant du conduit d'air configuré dans le carter (2) peut parvenir sous le couvercle (7).

14. Système de climatisation selon la revendication 13, **caractérisé en ce qu'**il est prévu au moins un intervalle (10) de chaque côté qui s'étend à peu près dans la direction d'écoulement de l'air.
